# EUROPEAN PATENT SPECIFICATION

(11) **EP 0 741 880 B1**
(45) Date of publication and mention of the grant of the patent: **19.05.1999**
(21) Application number: 94918761.1
(22) Date of filing: 13.06.1994
(51) Int. Cl.: G05D 23/01, F16K 31/64

(54) **THERMOSTATIC VALVE FOR A RADIATOR**
THERMOSTATISCHES VENTIL FÜR EINEN HEIZKÖRPER
VANNE THERMOSTATIQUE POUR RADIATEUR

(30) Priority: 15.06.1993 DE 4319814
(43) Date of publication of application: 13.11.1996
(73) Proprietor: Danfoss A/S, 6430 Nordborg (DK)
(72) Inventor: BOGH HANSEN, Henning, DK-8600 Silkeborg (DK)
(86) International application number: DK9400230
(87) International publication number: WO9429778

(56) References cited:
- DE-A- 2 616 529
- GB-A- 690 676

## Description

The invention relates to a thermostatic valve for a radiator, in which a tappet is arranged to be displaced axially by a thermostatic element, and displaces a closure member by way of a pin arranged in an axial extension.

A thermostatic valve of that kind is known from DE-PS 35 29 614.

Commercially available thermostatic valves for radiators of that kind consist of a valve housing, which has a pin projecting outwards through a gland for actuating the closure member of the valve, and a thermostat top part, which contains the thermostatic element and a tappet that it displaces, and which is fixed on the valve housing by means of a base, the head of the tappet co-operating with the pin. In most cases, the thermostatic valve has a saturated vapour filling (and therefore operates in dependence on temperature-dependent vapour pressure), or a liquid filling (and therefore operates in dependence on the temperature-dependent thermal expansion).

For the control function, the magnitude of the so-called "amplification" is important, that is, the shift of the closure member of the thermostatic valve per temperature change in °C. The greater the amplification, the greater the saving of energy and the comfort experienced. Primarily, the amplification is dependent on the filling material used, but also on the size and the type of capsule, in particular a bellows. The best amplifications of the commercially available thermostatic valves are about 0.38 mm/°C in the case of a vapour filling, and about 0.2 to 0.25 mm/°C in the case of a liquid filling.

The invention is based on the problem of providing a thermostatic valve for a radiator of the kind described in the introduction which has a greater amplification. In particular in the case of thermostatic valves having a liquid filling it is desirable to achieve a similar amplification to that which is already currently possible with vapour-filled capsules.

This problem is solved according to the invention by the features in Claim 1.

In this construction, the axial movement of the tappet is exploited to displace an amplifier element in a direction in which it can yield. This creates a relative movement between the tappet and the pin, so that the entire movement of the closure member is greater than that of the tappet.

From US-PS 4 995 587 it is already known that the closure member of a valve can be displaced by electrical stimulation of a piezoelectric element. Between the element and the closure member there is a stroke amplifier having an elastomeric filling between a larger and a smaller piston. Such a stroke amplifier cannot be used for a thermostatic valve for a radiator, however, on account of the temperature dependency of such an elastomer.

According to Claim 2, the ramps can have different inclinations in order to take into account structural features, for example, in respect of space requirements or self-locking.

The embodiment according to Claim 3 works with two threads, the different pitches of which ensure the additional axial component which leads to increase in the amplification. Because of the rotational movement, all parts maintain their concentric orientation with respect to the axis of the tappet and pin.

The development according to Claim 4 is recommended, because the parts are housed in a space-saving manner in one area which is already available in a thermostatic valve or can be made free without difficulty.

The features of claim 5 disclose a very simple guide system for the intermediate member.

According to the embodiment of Claim 6, the base of the thermostat top part can take on an additional function.

In the construction according to Claim 7, the axial additional movement is obtained by the transverse movement of a slider, the slider in turn defining two ramps of different inclination.

The embodiment according to Claim 8 produces a stroke amplifier having only a few components. The stop member of Claim 9 prevents excessive transverse load on the tappet head. According to Claim 10, the pin is able to act directly on the slider and can be loaded at most in the transverse direction by frictional entrainment.

The embodiment according to Claim 11, a transverse load on the pin can be avoided because an axially guided intermediate member is present.

In the development according to Claim 12, the head of the tappet is also largely safeguarded against transverse loads. If desired, axial guidance of the tappet head can be ensured by the two stop members of Claim 13.

According to Claim 14, the base of the thermostat top part can be used for taking over further functions even when using such a slider.

The adjusting facility according to Claim 15 is advisable, in order to adapt the stroke amplifier to the particular structural relationships. Claims 16 and 17 give corresponding proposals for the adjusting facility. An alternative when using an amplifier element with two threads consists in dividing the amplifier elements according to Claim 18.

The invention is explained in greater detail hereinafter with reference to preferred embodiments illustrated in the drawing, in which
- Fig. 1: shows a longitudinal section through a first embodiment of a thermostatic valve for a radiator according to the invention,
- Fig. 2: shows a partial section through a modification of Fig. 1,
- Fig. 3: shows a partial section through a second modification of Fig. 1,
- Fig. 4: shows a partial section through a third modification of Fig. 1,
- Fig. 5: shows a longitudinal section through an alternative construction of a thermostatic valve for a radiator according to the invention and
- Fig. 6: shows a partial section through a modification of Fig. 5.

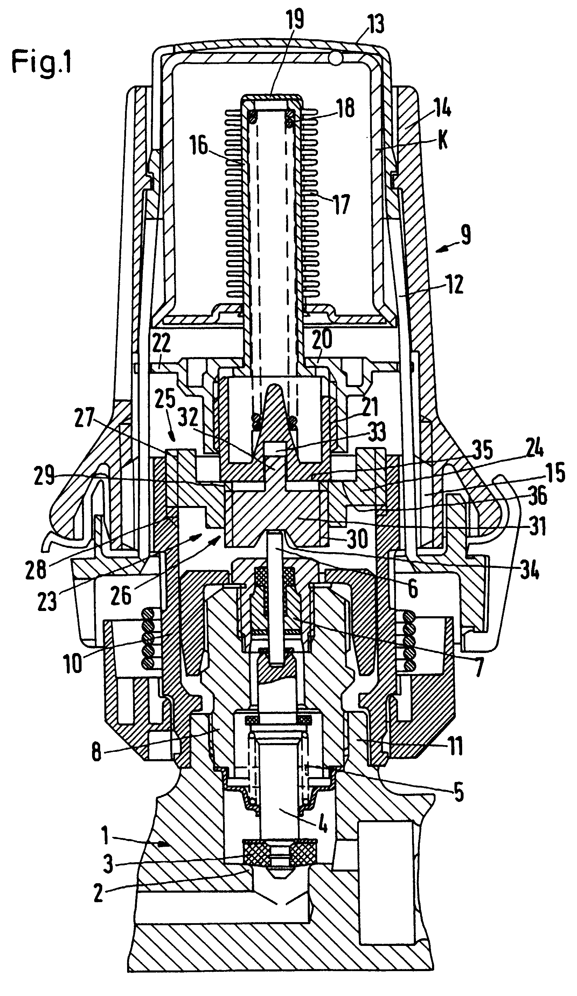

The thermostatic valve illustrated in Fig. 1 has a valve housing 1 with a valve seat 2 and a closure member 3. This is secured to a valve shaft 4 which is acted upon by a restoring spring 5 and is in operative connection with a pin 6. The pin is lead outwards through a gland 7 which is arranged in an insert 8 closing the valve housing at the top.

A thermostat top part 9 has a base 10 which is releasably secured to a collar 11 of the valve housing 1. The thermostat top part furthermore contains a liquid-filled capsule K which is held in position by means of support members 12 and an end plate 13. Its axial position can be changed by means of a rotary knob 14, which is screwed onto a thread 15 of the base 10, in order to set the desired temperature value. A tappet 16 is surrounded by a bellows 17 and encloses a securing spring 18. On changes in temperature, the tappet is displaced axially by a moving plate 19 and via the intermediary of a connecting member 20 carries with it a head 21. The connecting member has arms 22 which engage over the support members 12 like the tines of a fork and prevent rotation of the head 21.

According to the invention, a stroke amplifier 23 is provided. This has an amplifier element 24 which has a relatively steep ramp 25 and a relatively shallow ramp 26. The steeper ramp is formed by a non-self-locking first thread 27 on the amplifier element 24 which co-operates with a corresponding counter-thread 28 on the base 10. The second ramp 26 is formed by a shallower, non-self-locking second thread 29 with opposite direction of rotation on the amplifier element 24, which cooperates with a corresponding counter-thread 30 on an intermediate member 31. The intermediate member 31 has a peg 32 of non-cylindrical cross-section which engages in a guide 33 of complementary cross-section in the head 21 of the tappet 16. Since the head is held so that it does not rotate, the intermediate member 31 is also secured against rotation. On the underside of the intermediate member 31, running at right angles to the tappet axis, there is a coupling face 34 against which the pin 6 lies. The end face 35 of the head 21 acts from above on the end face 36 of the annular amplifier element 24.

The mode of operation is as follows:

When the tappet 16 shifts upwards as a result of a drop in temperature, the amplifier element 24 follows it, under the influence of the restoring spring 5 whilst simultaneously rotating through an angle that is predetermined by the inclination of the ramp 25. The rotation of the amplifier element 24 allows an axial displacement of the intermediate member 31, this axial movement being predetermined by the ramp 26. The distance between the end face 35 of the head 21 and the coupling face 34 of the intermediate member 31 consequently changes. The closure member 3 is therefore displaced not only by the stroke of the tappet 16 but also by a larger stroke.

If, for example, the thread 27 has a pitch of 2 mm/turn and the thread 29 has a pitch of 1 mm/turn, a stroke enlargement of 50 % is achieved, that is to say, the valve shaft 4 moves by 3 mm, when the pin 6 is displaced by 2 mm.

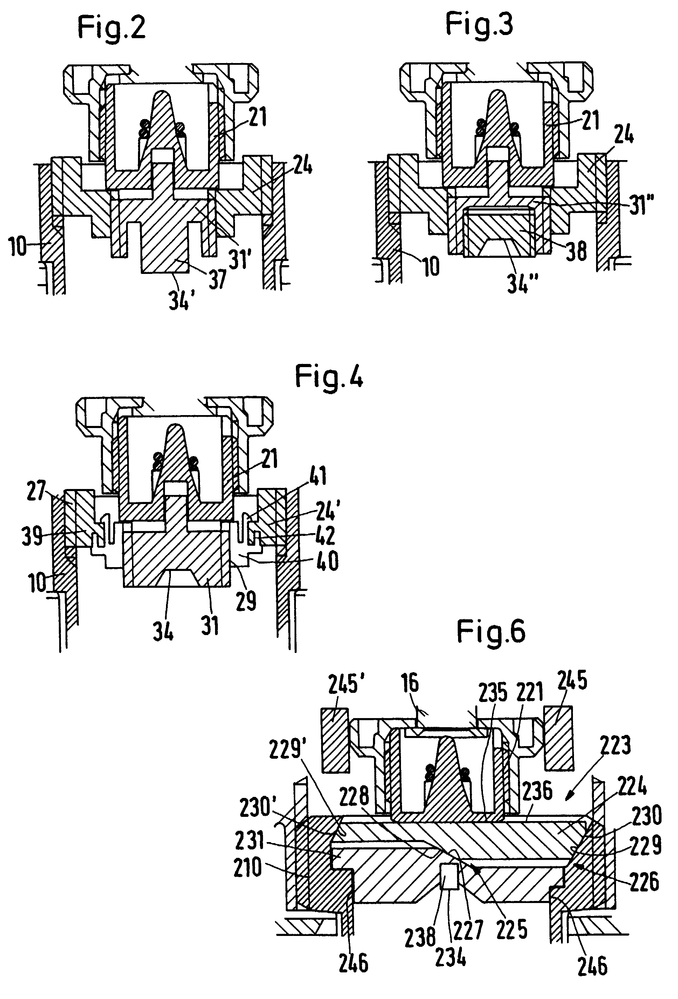

In the construction illustrated in Fig. 2, a modified intermediate member 31' is used. It carries the coupling face 34' on a projection 37 of abradable material. To adapt to a specific application, the desired adjustment can be made by shortening the projection 27. The adjustment serves to ensure that the distance of the end plate 13 from the coupling face 34 has a predetermined length at a specific temperature.

In the construction shown in Fig. 3, yet another modified intermediate member 31" is provided. This carries a screw element 38 on which the coupling face 34" is formed. An adjustment can likewise be made using this screw element.

In the construction shown in Fig. 4, the intermediate member remains unchanged, but the amplifier element 24' is changed. The latter comprises an outer part 39, which carries the thread 27, and an inner part 40, which carries the thread 29. The two parts are joined together with a snap-action connection 41 and are secured against rotation by additional pins 42. Assembly is thus facilitated and an adjustment is effected by bringing the intermediate member 31 into the correct orientation in the inner part 40.

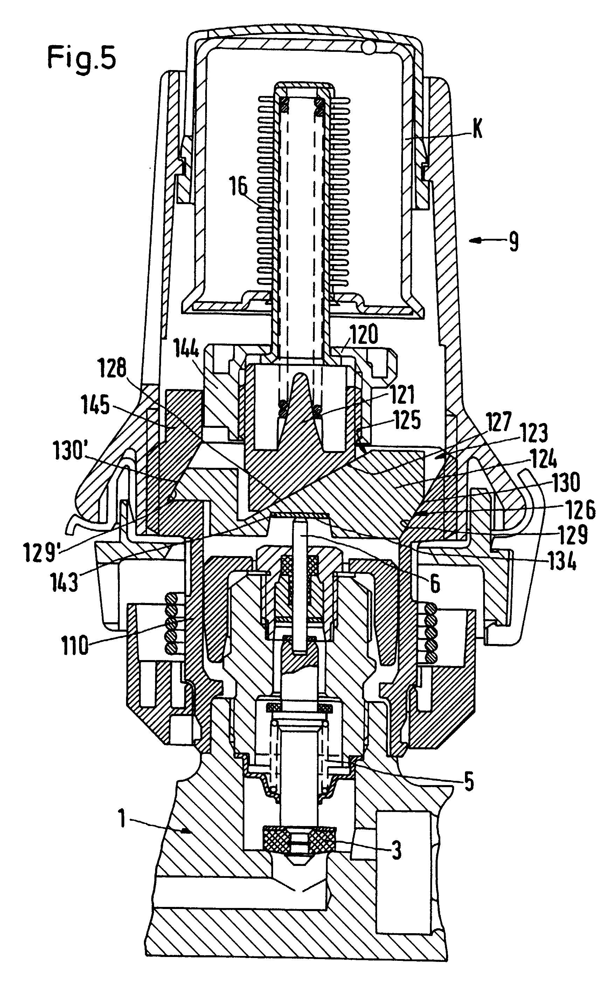

The parts in the construction shown in Fig. 5 correspond largely to those of Fig. 1 and therefore carry the same reference numbers. Only the parts of the stroke amplifier are changed, parts of corresponding function carrying reference numbers increased by 100.

The stroke amplifier 123 has an amplifier element 124 in the form of a slider. To form a first ramp 125, an inclined face 127 of relatively shallow inclination is provided, which co-operates with a corresponding inclined face 128 on the head 121 of the tappet 16. To form a second ramp 126, duplicate steeper inclined faces 129, 129' are provided, which co-operate with corresponding counter-faces 130, 131' on the base 110. The coupling face 134 for the pin 6 extends in a plane running at right angles to the tappet axis and is constructed on a plate 143 of low-friction material. On the side on which the lowest point of the ramp 125 is located, the connecting member 120 has an enlargement 144, which co-operates with a stop member 145 built into the housing and likewise mounted on the base 110, and prevents a transverse movement of the tappet 16.

The mode of operation is as follows:

When the temperature drops and the tappet moves upwards, the pin 6 follows under the influence of the restoring spring 5. The amplifier element 124 consequently shifts to the right under the influence of the second ramp 126. The distance between the tappet and the pin decreases. The movement of the closure member 3 is greater than that of the tappet 16.

In the construction shown in Fig. 6, changed parts of similar function carry reference numbers increased by 200 compared with Fig. 1. The stroke amplifier 223 again has a slider as its amplifier element 224. The head 221 of the tappet 16 acts with an end face 235 lying at right angles to the tappet axis on the upper side 236 of the slider. The amplifier element 224 has a first inclined face 227 for forming the first ramp 225, which face co-operates with a counter-face 228 on an intermediate member 231, and a pair of second inclined faces 229, 229' for forming a second ramp 226, which co-operate with second counter-faces 230, 230' on the base 210. The intermediate member 231 is guided axially against guide faces 246 of the base 210, and carries a screw element 238 so that the coupling face 234 can be adjusted. On both sides of the head 221 there are stop members 245, 245' which effect axial guidance of the head and are connected, for example, to the base 210.

The mode of operation is as follows:

On upward displacement of the tappet 16, the amplifier element 224 moves to the right and the intermediate member 231 follows in an upward direction. The stroke of the intermediate member 231 is here greater than the stroke of the tappet 16.

The construction shown in Fig. 6 produced the following data: The axial force between the tappet 16 and the amplifier element 224 is of the order of 20 to 50 N. With a good lubricant the coefficient of friction can be reduced to 0.02. This produces a frictional force of from 0.4 to 1.0 N, which is normally acceptable. If the ramp 225 forms an angle of 30° to a plane at right angles to the tappet axis, and the ramp 226 forms an angle of 60° to this plane, an amplification factor of 1.33 is obtained. If angles of 35° and 70° are chosen for these ramps, an amplification factor of about 1.5 is obtained. A capsule K with an amplification of 0.23 mm/°C can thus be brought to an amplification of 0.35 mm/°C.

The threads illustrated in Figs 1 to 4 do not need to have special forms, on the contrary, in many cases it is adequate for portions of thread to be present. Securing the intermediate members 31 against rotation can also be effected by suitable guidance in the base 10.

It is also possible to let the tappet 16 act on the amplifier element 24 by way of the intermediate member, and to couple the pin 6 to the amplifier element.

It is, of course, advisable to keep friction between parts sliding relative to one another to a minimum, which can be achieved by suitable selection of materials or by lubrication, for example with friction-reducing grease.

## Claims

1. A thermostatic valve for a radiator, in which a tappet is arranged to be displaced axially by a thermostat element and displaces a closure member by way of a pin arranged in an axial extension, characterized in that between the tappet (16) and the pin (6) there is a stroke amplifier (23; 123; 223) having two ramps (25, 26; 125, 126; 225, 226) and an amplifier element (24; 124; 224) arranged therebetween, which on axial movement of the tappet under the influence of the first ramp performs a transverse or rotary movement and, under the influence of the second ramp, this effects a change in the distance between the tappet and the pin.

2. A thermostatic valve for a radiator according to claim 1, characterized in that the ramps (25, 26; 125, 126; 225, 226) have different inclinations.

3. A thermostatic valve for a radiator according to claim 1 or 2, characterized in that, to form the first ramp (25) the amplifier element (24) carries a non-self-locking first thread (27) that co-operates with a first counter-thread (28) fixed against rotation, and to form the second ramp (26) carries a second thread (29) which co-operates with a second counter-thread (30) held so that it does not rotate.

4. A thermostatic valve for a radiator according to claim 3, characterized in that the amplifier element (24) is formed by a ring which externally carries the first thread (27) and internally carries the second thread (29), the tappet (16) has a head (21), held so that it does not rotate, which lies with its end face (35) against the end face (36) of the ring, and an intermediate member (31) carrying the second counter-thread (30) is guided axially and non-rotatably in the head (21) of the tappet.

5. A thermostatic valve for a radiator according to claim 4, characterized in that the intermediate member (31; 31'; 31") carries a non-cylindrical peg (32) which engages in a guide (33) of complimentary cross-section in the head (21) of the tappet.

6. A thermostatic valve for a radiator according to one of claims 3 to 5, characterized in that when using a valve housing (1) and a thermostat top piece (9) to be fixed thereon by means of a base (10), the first counter-thread (28) is arranged on the base (10).

7. A thermostatic valve for a radiator according to claim 1 or 2, characterized in that the amplifier element (124, 224) is a slider movable transversely to the tappet axis, which slider, to form the first ramp (125, 225), carries a first inclined face (127, 227) which co-operates with a first inclined counter-face (128, 228) on an adjacent element lying in the transmission path and, to form the second ramp (126, 226), carries a second inclined face (129, 129'; 229, 229') which co-operates with a second inclined counter-face (130, 130'; 230, 230') fixed to the housing.

8. A thermostatic valve for a radiator according to claim 7, characterized in that the adjacent element is formed by the head (21) of the tappet (16) carrying the first inclined counter-face (28).

9. A thermostatic valve for a radiator according to claim 8, characterized in that, for support of the head (121) of the tappet (16), a stop member (144) built into the housing is provided on the side of the lowest point of the first ramp (125).

10. A thermostatic valve for a radiator according to claim 7 or 8, characterized in that the pin (6) acts on a coupling face (134) of the slider running at right angles to the tappet axis.

11. A thermostatic valve for a radiator according to claim 7, characterized in that the adjacent element is formed by an intermediate member which carries the first inclined counter-face (230, 230') and is located between the slider and the pin.

12. A thermostatic valve for a radiator according to claim 11, characterized in that the head (221) of the tappet (16) acts with an end face (235) running at right angles to the tappet axis on a face (236) of the slider running parallel therewith.

13. A thermostatic valve for a radiator according to claim 12, characterized in that, for support of the head (221) of the tappet (16), two stop members (245, 245') built into the housing are provided on both sides in the direction of the slider movement.

14. A thermostatic valve for a radiator according to one of claims 11 to 13, characterized in that when using a valve housing (1) and a thermostat top part (9) to be secured thereto by means of a base (110; 210), the second inclined counter-face (130, 130'; 230, 230') and/or at least one of the stop members (145; 245, 245') built into the housing are formed on the base (110, 210).

15. A thermostatic valve for a radiator according to one of claims 1 to 14, characterized in that the stroke amplifier is provided with an adjustable coupling face (34'; 34"; 234) for the pin (6).

16. A thermostatic valve for a radiator according to claim 15, characterized in that the adjustable coupling face (34"; 234) is formed by a screw element (38; 238) carried by the intermediate member (31"; 231).

17. A thermostatic valve for a radiator according to claim 15, characterized in that the adjustable coupling face is formed by a shortenable projection (37) on the intermediate member (31).

18. A thermostatic valve for a radiator according to one of claims 3 to 6, characterized in that the amplifier element (24') consists of two parts (39, 40) to be joined by a snap-action connection (41), of which one part (39) carries the first thread (27) and the other part (40) carries the second thread (29).

## Patentansprüche

1. Heizkörper-Thermostatventil, bei dem ein Stößel von einem Thermostatelement axial verstellbar ist und über einen in axialer Verlängerung des Stößels angeordneten Stift ein Verschlußstück verstellt, **dadurch gekennzeichnet,** daß zwischen Stößel (16) und Stift (6) ein Hubverstärker (23; 123; 223) mit zwei Rampen (25, 26; 125, 126; 225, 226) und einem dazwischen angeordneten Verstärkerelement (24; 124; 224) vorgesehen ist, das bei einer Axialbewegung des Stößels unter dem Einfluß der ersten Rampe eine Quer- oder Drehbewegung ausführt, und diese unter dem Einfluß der zweiten Rampe eine Änderung des Abstandes zwischen dem Stößel und dem Stift bewirkt.

2. Heizkörper-Thermostatventil nach Anspruch 1, **dadurch gekennzeichnet,** daß die Rampen (25, 26; 125, 126; 225, 226) unterschiedliche Neigung haben.

3. Heizkörper-Thermostatventil nach Anspruch 1 oder 2, **dadurch gekennzeichnet**, daß das Verstärkerelement (24) zur Bildung der ersten Rampe (25) ein nicht selbsthemmendes erstes Gewinde (27), das mit einem drehfesten ersten Gegengewinde (28) zusammenwirkt, und zur Bildung der zweiten Rampe (26) ein zweites Gewinde (29), das mit einem drehfest gehaltenen zweiten Gegengewinde (30) zusammenwirkt, trägt.

4. Heizkörper-Thermostatventil nach Anspruch 3, **dadurch gekennzeichnet**, daß das Verstärkerelement (24) durch einen Ring gebildet ist, der außen das erste Gewinde (27) und innen das zweite Gewinde (29) trägt, daß der Stößel (16) einen drehfest gehaltenen Kopf (21) aufweist, der mit seiner Stirnseite (35) an der Stirnseite (36) vom Ring anliegt, und daß ein das zweite Gegengewinde (30) tragendes Zwischenstück (31) axial und drehfest im Kopf (21) des Stößels geführt wird.

5. Heizkörper-Thermostatventil nach Anspruch 4, **dadurch gekennzeichnet**, daß das Zwischenstück (31; 31'; 31") einen nicht-zylindrischen Zapfen (32) trägt, der in eine Führung (33) entsprechenden Querschnitts im Kopf (21) des Stößels eingreift.

6. Heizkörper-Thermostatventil nach einem der Ansprüche 3 bis 5, **dadurch gekennzeichnet**, daß, bei der Anwendung eines Ventilgehäuses (1) und eines Thermostataufsatzes (9), der mit Hilfe eines Sockels (10) am Ventilgehäuse befestigt ist, das erste Gegengewinde (28) am Sockel (10) angebracht ist.

7. Heizkörper-Thermostatventil nach Anspruch 1 oder 2, **dadurch gekennzeichnet,** daß das Verstärkerelement (124, 224) ein quer zur Stößelachse bewegbarer Schieber ist, der zur Bildung der ersten Rampe (125, 225) eine erste Schrägfläche (127, 227) trägt, die mit einer ersten Gegenschrägfläche (128, 228) an einem im Übertragungsweg liegenden Nachbarelement zusammenwirkt, und, zur Bildung der zweiten Rampe (126, 226) eine zweite Schrägfläche (129, 129'; 229, 229') trägt, die mit einer gehäusefesten zweiten Gegenschrägfläche (130, 130'; 230, 230') zusammenwirkt.

8. Heizkörper-Thermostatventil nach Anspruch 7, **dadurch gekennzeichnet,** daß das Nachbarelement durch den die erste Gegenschrägfläche (28) tragenden Kopf (21) des Stößels (16) gebildet ist.

9. Heizkörper-Thermostatventil nach Anspruch 8, **dadurch gekennzeichnet**, daß zum Abstützen des Kopfes (121) des Stößels (16) ein in das Gehäuse eingebauter Anschlag (144) auf der Seite der tiefsten Stelle der ersten Rampe (125) vorgesehen ist.

10. Heizkörper-Thermostatventil nach Anspruch 7 oder 8, **dadurch gekennzeichnet**, daß der Stift (6) an einer senkrecht zur Stößelachse verlaufenden Kupplungsfläche (134) des Schiebers angreift.

11. Heizkörper-Thermostatventil nach Anspruch 7, **dadurch gekennzeichnet**, daß das Nachbarelement durch ein Zwischenstück gebildet ist, das die erste Gegenschrägfläche (230, 230') trägt und zwischen Schieber und Stift angebracht ist.

12. Heizkörper-Thermostatventil nach Anspruch 11, **dadurch gekennzeichnet**, daß der Kopf (221) des Stößels (16) mit einer senkrecht zur Stößelachse verlaufenden Stirnfläche (235) an einer parallel dazu verlaufenden Fläche (236) des Schiebers angreift.

13. Heizkörper-Thermostatventil nach Anspruch 12, **dadurch gekennzeichnet**, daß zum Abstützen des Kopfes (221) des Stößels (16) zwei in das Gehäuse eingebaute Anschläge (245, 245') auf beiden Seiten in Richtung der Schieberbewegung vorgesehen sind.

14. Heizkörper-Thermostatventil nach einem der Ansprüche 11 bis 13, **dadurch gekennzeichnet**, daß bei der Anwendung eines Ventilgehäuses (1) und eines mit Hilfe eines Sockels (110; 210) daran zu befestigenden Thermostataufsatzes (9) die zweite Gegenschrägfläche (130, 130'; 230, 230') und/oder mindestens eines der gehäusefesten Anschläge (145; 245, 245') am Sockel (110, 210) ausgebildet sind.

15. Heizkörper-Thermostatventil nach einem der Ansprüche 1 bis 14, **dadurch gekennzeichnet,** daß der Hubverstärker mit einer justierbaren Kupplungsfläche (34'; 34"; 234) für den Stift (6).

16. Heizkörper-Thermostatventil nach Anspruch 15, **dadurch gekennzeichnet,** daß die justierbare Kupplungsfläche (34"; 234) durch ein vom Zwischenstück (31"; 231) getragenes Schraubelement (38; 238) gebildet ist.

17. Heizkörper-Thermostatventil nach Anspruch 15, **dadurch gekennzeichnet,** daß die justierbare Kupplungsfläche durch einen kürzbaren Vorsprung (37) am Zwischenstück (31) gebildet wird.

18. Heizkörper-Thermostatventil nach einem der Ansprüche 3 bis 6, **dadurch gekennzeichnet,** daß das Verstärkerelement (24') aus zwei durch eine Schnappverbindung (41) zu vereinigenden Teilen (39, 40) besteht, wobei das eine Teil (39) das erste Gewinde (27) und das andere Teil (40) das zweite Gewinde (29) trägt.

## Revendications

1. Une vanne thermostatique pour un radiateur dans laquelle un poussoir est agencé pour être déplacé axialement par un élément de thermostat et déplace un élément de fermeture au moyen d'un axe agencé dans un prolongement axial, caractérisée en ce qu'entre le poussoir (16) et l'axe (6) il y a un amplificateur de course (23, 123, 223) ayant deux rampes (25, 26, 125, 126, 225, 226) et un élément amplificateur (24, 124, 224) agencé entre eux qui lors du mouvement axial du poussoir sous l'influence de la première rampe réalise un mouvement de rotation ou transversal et sous l'influence de la deuxième rampe ceci produit une modification dans la distance entre le poussoir et l'axe.

2. Une vanne thermostatique pour un radiateur selon la revendication 1, caractérisée en ce que les rampes (25, 26, 125, 126, 225, 226) ont des inclinaisons différentes.

3. Une vanne thermostatique pour un radiateur selon la revendication 1 ou 2, caractérisée en ce que pour former la première rampe (25), l'élément amplificateur (24) porte un premier filetage non autobloquant (27) qui coopère avec un premier contre-écrou (28) fixe vis-à-vis de la rotation et pour former la seconde rampe (26) porte un deuxième filetage (29) qui coopère avec un deuxième contre-écrou (30) maintenu afin qu'il ne tourne pas.

4. Une vanne thermostatique pour un radiateur selon la revendication 3, caractérisée en ce que l'élément amplificateur (24) est formé par une bague qui porte extérieurement le premier filetage (27) et porte intérieurement le deuxième filetage (29), le poussoir (16) comporte une tête (21) maintenue afin qu'il ne tourne pas qui s'étend avec sa face d'extrémité (35) contre la face d'extrémité (36) de la bague, et un élément intermédiaire (31) supportant le deuxième contre-écrou (30) est guidé axialement et de façon non rotative dans la tête (21) du poussoir.

5. Une vanne thermostatique pour un radiateur selon la revendication 4, caractérisée en ce que l'élément intermédiaire (31, 31', 31") porte un ergot non cylindrique (32) qui vient en prise dans un guide (33) de section transversale complémentaire dans la tête (21) du poussoir.

6. Une vanne thermostatique pour un radiateur selon l'une des revendications 3 à 5, caractérisée en ce que lorsqu'on utilise un boîtier de vanne (1) et une pièce supérieure de thermostat (9) devant être fixée à celui-ci au moyen d'une embase (10), le premier contre-écrou (28) est agencé sur l'embase (10).

7. Une vanne thermostatique pour un radiateur selon la revendication 1 ou 2, caractérisée en ce que l'élément amplificateur (124, 224) est un coulisseau mobile transversalement à l'axe du poussoir, lequel coulisseau, pour former la première rampe (125, 225), porte une première face inclinée (127, 227) qui coopère avec une première contre-face inclinée (128, 228) sur un élément adjacent s'étendant dans le trajet de transmission, et pour former la seconde rampe (126, 226) porte une deuxième face inclinée (129, 129', 229, 229') qui coopère avec une deuxième contre-face inclinée (130, 130', 230, 230') fixée au boîtier.

8. Une vanne thermostatique pour un radiateur selon la revendication 7, caractérisée en ce que l'élément adjacent est formé par la tête (21) du poussoir (16) portant la première contre-face inclinée (28).

9. Une vanne thermostatique pour un radiateur selon la revendication 8, caractérisée en ce que pour supporter la tête (121) du poussoir (16), on prévoit sur le côté du point inférieur de la première rampe (125) un élément d'arrêt (144) réalisé dans le boîtier.

10. Une vanne thermostatique pour un radiateur selon la revendication 7 ou 8, caractérisée en ce que l'axe (6) agit sur une face de couplage (134) du coulisseau se déplaçant à angle droit par rapport à l'axe du poussoir.

11. Une vanne thermostatique pour un radiateur selon la revendication 7, caractérisée en ce que l'élément adjacent est formé par un élément intermédiaire qui porte la première contre-face inclinée (230, 230') et est disposé entre le coulisseau et l'axe.

12. Une vanne thermostatique pour un radiateur selon la revendication 11, caractérisée en ce que la tête (221) du poussoir (16) agit avec une face d'extrémité (235) se déplaçant à angle droit par rapport à l'axe du poussoir sur une face (236) du coulisseau se déplaçant en parallèle avec elle.

13. Une vanne thermostatique pour un radiateur selon la revendication 12, caractérisée en ce que pour le support de la tête (221) du poussoir (16) on prévoit deux éléments d'arrêt (245, 245') réalisés dans le boîtier, sur les deux côtés dans la direction du mouvement du coulisseau.

14. Une vanne thermostatique pour un radiateur selon l'une des revendications 11 à 13, caractérisée en ce que lorsqu'on utilise un boîtier de vanne (1) et une partie supérieure de thermostat (9) devant être fixée à celui-ci au moyen d'une embase (110, 210), la deuxième contre-face inclinée (130, 130', 230, 230') et/ou au moins un des éléments d'arrêt (145, 245, 245') réalisés dans le boîtier sont formés sur l'embase (110, 210).

15. Une vanne thermostatique pour un radiateur selon l'une des revendications 1 à 14, caractérisée en ce que l'amplificateur de course est prévu avec une phase de couplage réglable (34', 34", 234) pour l'axe (6).

16. Une vanne thermostatique pour un radiateur selon la revendication 15, caractérisée en ce que la face de couplage réglable (34", 234) est formée par un élément à vis (38, 238) porté par l'élément intermédiaire (31", 231).

17. Une vanne thermostatique pour un radiateur selon la revendication 15, caractérisée en ce que la face de couplage réglable est formée par un prolongement rétrécissable (37) sur l'élément intermédiaire (31).

18. Une vanne thermostatique pour un radiateur selon l'une des revendications 3 à 6, caractérisée en ce que l'élément amplificateur (24') se compose de deux parties (39, 40) devant être reliées par une connexion à effet instantané (41) dont une partie (39) porte le premier filetage (27) et l'autre partie (40) porte le deuxième filetage (29).
